# EUROPEAN PATENT SPECIFICATION

(11) **EP 3 405 344 B1**
(45) Date of publication and mention of the grant of the patent: **07.06.2023**
(21) Application number: 17742107.0
(22) Date of filing: 23.01.2017
(51) Int. Cl.: B32B 27/32, B32B 3/26, B32B 15/08, B32B 15/085, B32B 27/06, B32B 27/08

(54) **BI-ORIENTED, CAVITATED, LINEAR, LOW-DENSITY FILM WITH GOOD SEALING PROPERTIES**
BI-ORIENTIERTE, KAVITIERTE, LINEARE FOLIE MIT NIEDRIGER DICHTE UND GUTEN VERSIEGELUNGSEIGENSCHAFTEN
FILM BI-ORIENTÉ, À CAVITÉS, LINÉAIRE À FAIBLE DENSITÉ AYANT DE BONNES PROPRIÉTÉS DE SCELLEMENT

(30) Priority: 21.01.2016 US 201662281567 P
(43) Date of publication of application: 28.11.2018
(60) Divisional application: 22212178.2
(73) Proprietor: Jindal Innovation Center SRL, 6761 Virton (BE)
(72) Inventor: AMBROISE, Benoit, 6717 Nobressart (BE)
(74) Representative: Barker Brettell LLP
(86) International application number: PCT/US2017/014571
(87) International publication number: WO 2017/127808

(56) References cited:
- WO-A1-2010/047905
- WO-A1-2017/087809
- WO-A1-2017/112816
- WO-A1-2017/120340
- WO-A1-2017/184633
- US-A- 5 756 219
- US-A1- 2009 110 888
- US-A1- 2011 236 668
- US-A1- 2015 258 756

## Description

### FIELD

This disclosure relates to bi-oriented, linear, low-density films having good sealing properties.

### BACKGROUND

Cast or blown unoriented polyethylene ("PE") or polypropylene ("PP") films are used as sealants in packaging or other applications, and may be combined with other webs, which are printed, like paper, polyethylene terephthalate) ("PET"), biaxially oriented PP ("BOPP"), metallized PET or BOPP, Nylon^{®}, or aluminum foil in order to provide the film with rigidity and barrier protection.

Sealant webs, such as those just described, are often white-pigmented in order to provide a bright white base for printed colors thereon. Use of white-sealant webs saves on the high cost of printing white ink.

Solid particles or incompatible polymer(s) in a PP film may undergo orientation in order to produce cavitated BOPP films. The orientation process enhances cavitation. A drawback of cavitation, however, is impairment of seal strength. WO2010047905 discloses a multi-layer film made from LLDPE materials.

### SUMMARY

The present invention provides biaxially oriented, multilayered films as defined in the claims. Further relevant subject matter that assists in the understanding of the invention as claimed is disclosed.

**[0006.1]** Disclosed are methods, compositions, structures, and uses for a biaxially oriented, multilayered film that may include a core layer comprising metallocene, linear, low-density polyethylene (mLLDPE), wherein the core layer is flanked by a first skin layer and a second skin layer. This same type (*e*.*g*., melting index, density, and/or melting peak) of mLLDPE, or different type(s) or blends thereof, may be in the first skin layer and/or the second skin layer, wherein the first skin layer is located on a first side of the core layer, and the second skin layer is located on a second side of the core layer, wherein the first side is on an opposite side of the core layer as compared to the second side. In addition, the biaxially oriented, multilayered film has a sealing strength of at least 400 g/cm at 100 °C under a pressure of 41 N/cm² at a dwell time of 0.75 s.

Also disclosed but not claimed is a method for making the foregoing biaxially oriented, multilayered film. The method may include coextruding the core layer, the first skin layer and the second skin layer of the foregoing biaxially oriented, multilayered film, and then orienting the biaxially oriented, multilayered film has a sealing strength of at least 400 g/cm at 100°C under a pressure of 41 N/cm² at a dwell time of 0.75 s. The foregoing biaxially oriented, multilayered film includes tie layers intermediate to the skin layers and the core layer.

Also disclosed are uses of the foregoing biaxially oriented, multilayered films, e.g., those with and without tie layer(s) wherein such uses may be in packaging, tagging, bagging, or labeling applications.

**[008.1]** In embodiments of the biaxially oriented, multilayered films of claim 1, the following optional features may apply:
- a density of the biaxially oriented, multilayered film may be at or below 0.8 g/cm³
- the biaxially oriented, multilayered film may further comprise one or more barrier additives
- the LLDPE, as compared to each other, may be of the same or different type(s) in each of the core layer, the first skin layer, and the second skin layer
- in each of the tie layers the LLDPE, as compared to each other, may be the same or different as the type(s) in each of the core layer, the first skin layer, and the second skin layer
- the sealing strength of the biaxially oriented, multilayered film may be at least 1500 g/cm at 130°C
- the sealing strength of the biaxially oriented, multilayered film may be at least 2000 g/cm at 130°C
- the core layer may comprise at least 80 wt% of the LLDPE
- the biaxially oriented, multilayered film may further comprise metallization layer(s), primer(s), coating(s), printing ink(s), a lamination layer or combinations thereof
- the biaxially oriented, multilayered film may further comprise surface treatment(s) to any layer of the biaxially oriented, multilayered film
- the biaxially oriented, multilayered film may further comprise hydrocarbon resin in the core layer
- the biaxially oriented, multilayered film may have a light transmission of at least 40 %
- a first type of the LLDPE in the first skin layer may be less dense than a second type of the LLDPE in the second skin layer.

### DETAILED DESCRIPTION

Below, directional terms, such as "above," "below," "upper," "lower," "front," "back," "top," "bottom," etc., are used for convenience in referring to the accompanying drawings. In general, "above," "upper," "upward," "top," and similar terms refer to a direction away the earth's surface, and "below," "lower," "downward," "bottom," and similar terms refer to a direction toward the earth's surface, but is meant for illustrative purposes only, and the terms are not meant to limit the disclosure.

Various specific embodiments, versions and examples are now be described, including exemplary embodiments and definitions that are adopted herein for purposes of understanding. While the following detailed description gives specific preferred embodiments, those skilled in the art will appreciate that these embodiments are exemplary only, and that the disclosure can be practiced in other ways. For purposes of determining infringement, the scope of the invention will refer to the any claims, including their equivalents, and elements or limitations that are equivalent to those that are recited.

Cast or blown unoriented polyethylene ("PE") or polypropylene ("PP") films are used as sealants in packaging or other applications, and may be combined with other webs, which are printed, like paper, polyethylene terephthalate) ("PET"), biaxially oriented PP ("BOPP"), metallized PET or BOPP, Nylon^{®}, or aluminum foil in order to provide the film with rigidity and barrier protection.

Sealant webs, such as those just described, are often white-pigmented in order to provide a bright white base for printed colors thereon. Use of white-sealant webs saves on the high cost of printing white ink.

Solid particles or incompatible polymer(s) in a PP film may undergo orientation to provide cavitated BOPP films, and thereby provide a white opaque film with a lower density, *i*.*e*., higher yield or more square meters per kilogram of film. The orientation process enhances cavitation. A drawback of cavitation, however, is impairment of seal strength.

Surprisingly, linear, low-density PE ("LLDPE") film may be cavitated during bi-orientation and produce a white-opaque film having a lower density. This was surprising due to the low crystallinity of the LLDPE resin. Furthermore, and contrary to cavitated BOPP films, is that packages may be produced that have high-seal strengths, potentially good hermeticity, and sealing that mitigates or prevents contamination through the seal.

The new, multilayered films provide heat-sealability and enhanced sealing properties (*e*.*g*., high seal-strengths, hermetic seals, seal-through-contamination) to packages and/or labels at reduced thicknesses. The customer benefits in having a reduced amount of packaging at same or better performances.

As used herein, "polymer" may be used to refer to homopolymers, copolymers, interpolymers, terpolymers, etc. Likewise, a "copolymer" may refer to a polymer comprising two monomers or to a polymer comprising three or more monomers.

As used herein, "intermediate" is defined as the position of one layer of a multilayered film wherein said layer lies between two other identified layers. In some embodiments, the intermediate layer may be in direct contact with either or both of the two identified layers. In other embodiments, additional layers may also be present between the intermediate layer and either or both of the two identified layers.

As used herein, "elastomer" is defined as a propylene-based or ethylene-based copolymer that can be extended or stretched with force to at least 100% of its original length, and upon removal of the force, rapidly *(e*.*g*., within 5 seconds) returns to its original dimensions.

As used herein, "plastomer" is defined as a propylene-based or ethylene-based copolymer having a density in the range of 0.850 g/cm³ to 0.920 g/cm³ and a DSC melting point of at least 40° C.

As used herein, "substantially free" is defined to mean that the referenced film layer is largely, but not wholly, absent a particular component. In some embodiments, small amounts of the component may be present within the referenced layer as a result of standard manufacturing methods, including recycling of film scraps and edge trim during processing.

### Core Layer

As is known to those skilled in the art, the core layer of a multilayered film is most commonly the thickest layer and provides the foundation of the multilayered structure. The core layer in the claimed invention core layer comprises linear, low-density polyethylene (LLDPE) and from 2 wt.% to 30 wt.% based on the total weight of the core layer of one or more cavitating agents, wherein the LLDPE comprises metallocene, linear, low-density polyethylene. In some embodiments, the core may also contain lesser amounts of additional polymer(s) selected from the group consisting of propylene polymer, ethylene polymer, ethylene-propylene copolymers, ethylene-propylene-butene terpolymers, elastomers, plastomers, and combinations thereof. The LLDPE in the core layer is one with a melting index of 1 to 3 g/10 min (measured at 190°C - 2.13 Kg conditions), a density of 0.915 to 0.930 g/cm³, and a melting peak of 115 to 135°C.

The core layer may further include a hydrocarbon resin. Hydrocarbon resins may serve to enhance or modify the flexural modulus, improve processability, or improve the barrier properties of the film. The resin may be a low molecular weight hydrocarbon that is compatible with the core polymer. Optionally, the resin may be hydrogenated. The resin may have a number average molecular weight less than 5000, preferably less than 2000, most preferably in the range of from 500 to 1000. The resin can be natural or synthetic and may have a softening point in the range of from 60° C to 180° C.

Suitable hydrocarbon resins include, but are not limited to petroleum resins, terpene resins, styrene resins, and cyclopentadiene resins. In some embodiments, the hydrocarbon resin is selected from the group consisting of aliphatic hydrocarbon resins, hydrogenated aliphatic hydrocarbon resins, aliphatic/aromatic hydrocarbon resins, hydrogenated aliphatic aromatic hydrocarbon resins, cycloaliphatic hydrocarbon resins, hydrogenated cycloaliphatic resins, cycloaliphatic/aromatic hydrocarbon resins, hydrogenated cycloaliphatic/aromatic hydrocarbon resins, hydrogenated aromatic hydrocarbon resins, polyterpene resins, terpene-phenol resins, rosins and rosin esters, hydrogenated rosins and rosin esters, and combinations thereof

Hydrocarbon resins that may be suitable for use as described herein include EMPR 120, 104, 111, 106, 112, 115, EMFR 100 and 100A, ECR-373 and ESCOREZ^{®} 2101, 2203, 2520, 5380, 5600, 5618, 5690 (commercially available from ExxonMobil Chemical Company of Baytown, Tex.); ARKON^{™} M90, M100, M 115 and M135 and SUPER ESTER^{™} rosin esters (commercially available from Arakawa Chemical Company of Japan); SYLVARES^{™} phenol modified styrene, methyl styrene resins, styrenated terpene resins, ZONATAC^{™} terpene-aromatic resins, and terpene phenolic resins (commercially available from Arizona Chemical Company of Jacksonville, Fla.); SYLVATAC^{™} and SYLVALITE^{™} rosin esters (commercially available from Arizona Chemical Company of Jacksonville, Fla.); NORSOLENE^{™} aliphatic aromatic resins (commercially available from Cray Valley of France); DERTOPHENE^{™} terpene phenolic resins (commercially available from DRT Chemical Company of Landes, France); EASTOTAC^{™} resins, PICCOTAC^{™} C5/C9 resins, REGALITE^{™} and REGALREZ^{™} aromatic and REGALITE^{™} cycloaliphatic/aromatic resins (commercially available from Eastman Chemical Company of Kingsport, Tenn.); W1NGTACK^{™} ET and EXTRA^{™} (commercially available from Sartomer of Exton, Pa.); FORAL^{™}, PENTALYN^{™}, and PERMALYN^{™} rosins and rosin esters (commercially available from Hercules, now Eastman Chemical Company of Kingsport, Tenn.); QUINTONE^{™} acid modified C5 resins, C5/C9 resins, and acid modified C5/C9 resins (commercially available from Nippon Zeon of Japan); and LX^{™} mixed aromatic/cycloaliphatic resins (commercially available from Neville Chemical Company of Pittsburgh, Pa.); CLEARON^{™} hydrogenated terpene aromatic resins (commercially available from Yasuhara of Japan); and PICCOLYTE^{™} (commercially available from Loos & Dilworth, Inc. of Bristol, Pa.). Other suitable hydrocarbon resins may be found in U.S. Pat. No. 5,667,902. The preceding examples are illustrative only and by no means limiting.

The amount of such hydrocarbon resins, either alone or in combination, in the core layer is preferably less than 20 wt %, more preferably in the range of from 1 wt % to 5wt %, based on the total weight of the core layer.

The core layer may further comprise one or more additives such as opacifying agents, pigments, colorants, slip agents, antioxidants, anti-fog agents, antistatic agents, fillers, moisture barrier additives, gas barrier additives, and combinations thereof, as discussed in further detail below. A suitable anti-static agent is ARMOSTAT^{™} 475 (commercially available from Akzo Nobel of Chicago, Ill.).

Cavitating agents are present in the core layer in an amount of from 2 to 30 wt %, preferably the amount is less than 20 wt %, most preferably the amount is in the range of from 2 wt % to 10 wt % based on the total weight of the core layer.

Preferably, the total amount of additives in the core layer comprises up to about 20 wt % of the core layer, but some embodiments may comprise additives in the core layer in an amount up to about 30 wt % of the core layer.

The core layer preferably has a thickness in the range of from about 5 µm to 100 µm, more preferably from about 5 µm to 50 µm, most preferably from 5 µm to 25 µm.

### Tie Layer(s)

Tie layer(s) of a multilayered film is typically used to connect two other layers of the multilayered film structure, *e*.*g*., a core layer and a sealant layer, and is positioned intermediate these other layers. In the claimed invention there is a first tie layer, consisting of LLDPE, that is located between the core layer and the first skin layer, and there is a second tie layer, consisting of LLDPE, that is located between the core layer and the second skin layer, wherein the first tie layer and the second tie layer do not include cavitating agents, and wherein the LLDPE comprises metallocene, linear, low-density polyethylene.

In some embodiments, the tie layer is in direct contact with the surface of the core layer. In other embodiments, another layer or layers may be intermediate the core layer and the tie layer. Examples of LLDPE materials include EXCEED^{™} 1012CA and 1018CA metallocene polyethylenes.

The thickness of the tie layer is typically in the range of from about 0.50 to 25 µm, preferably from about 0.50 µm to 12 µm, more preferably from about 0.50 µm to 6 µm, and most preferably from about 2.5 µm to 5 µm. However, in some thinner films, the tie layer thickness may be from about 0.5 µm to 4 µm, or from about 0.5 µm to 2 µm, or from about 0.5 µm to 1.5 µm.

A skin layer is provided on the outer surfaces of the core layer. In this regard, in the claimed invention a first skin layer, consisting of LLDPE and optionally additives, is located on the first side of the core layer and a second skin layer, consisting of LLDPE and optionally additives, is located on the second side of the core layer, wherein the LLDPE comprises metallocene, linear, low-density polyethylene. Skin layer(s) may be provided to improve the film's barrier properties, processability, printability, and/or compatibility for metallization, coating, and lamination to other films or substrates.

Examples of LLDPE materials include Exceed^{™} resin from ExxonMobil Chemicals or Evolue^{™} resin from Prime Polymer or Elite resin from Dow. For coating and printing functions, the skin layer may preferably be surface-treated.

The skin layer may also comprise processing aid additives, such as anti-block agents, anti-static agents, slip agents and combinations thereof, as discussed in further detail below.

The thickness of the skin layer depends upon the intended function of the skin layer, but is typically in the range of from about 0.50 µm to 3.5 µm, preferably from about 0.50 µm to 2 µm, and in many embodiments most preferably from about 0.50 µm to 1.5 µm. Also, in thinner film embodiments, the skin layer thickness may range from about 0.50 µm to 1.0 µm, or 0.50 µm to 0.75 µm.

### Coating

In some embodiments, one or more coatings, such as for barrier, printing and/or processing, may be applied to outer surface(s) of the multilayered films. For instance, the coating(s) may be directly on the outer surfaces *(i.e*., those surfaces facing away from the core) of tie layers, on either or both sides of the core layer, or elsewhere. Such coatings may include acrylic polymers, such as ethylene acrylic acid (EAA), ethylene methyl acrylate copolymers (EMA), polyvinylidene chloride (PVdC), poly(vinyl)alcohol (PVOH) and EVOH. The coatings may be applied by an emulsion or solution coating technique or by co-extrusion and/or lamination.

The PVdC coatings that may be suitable for use with the multilayered films are any of the known PVdC compositions heretofore employed as coatings in film manufacturing operations, *e*.*g*., any of the PVdC materials described in U.S. Pat. No. 4,214,039, U.S. Pat. No. 4,447,494, U.S. Pat. No. 4,961,992, U.S. Pat. No. 5,019,447, and U.S. Pat. No. 5,057,177.

Known vinyl alcohol-based coatings, such as PVOH and EVOH, that are suitable for use with the multilayered films include VINOL^{™} 125 or VINOL^{™} 325 (both commercially available from Air Products, Inc. of Allentown, Pa.). Other PVOH coatings are described in U.S. Pat. No. 5,230,963.

Before applying the coating composition to the appropriate substrate, the outer surface(s) of the film may be treated as noted herein to increase its surface energy. This treatment can be accomplished by employing known techniques, such as flame treatment, plasma, corona discharge, film chlorination, *e*.*g*., exposure of the film surface to gaseous chlorine, treatment with oxidizing agents such as chromic acid, hot air or steam treatment, flame treatment and the like. Although any of these techniques is effectively employed to pre-treat the film surface, a frequently preferred method is corona discharge, an electronic treatment method that includes exposing the film surface to a high voltage corona discharge while passing the film between a pair of spaced electrodes. After treatment of the film surface, the coating composition is then applied thereto.

Coating compositions may be applied to the film as a water-based solution. The coating composition may be applied to the treated surface in any convenient manner, such as by gravure coating, roll coating, dipping, spraying, and the like. The excess aqueous solution can be removed by squeeze rolls, doctor knives, and the like.

### Additives

Additives that may be present in one or more layers of the multilayered films, include, but are not limited to opacifying agents, pigments, colorants, cavitating agents, slip agents, antioxidants, anti-fog agents, anti-static agents, anti-block agents, fillers, moisture barrier additives, gas barrier additives and combinations thereof. Such additives may be used in effective amounts, which vary depending upon the property required. Additives such as oxygen scavenger or gas scavenger can be added in any layer.

Examples of suitable opacifying agents, pigments or colorants are iron oxide, carbon black, aluminum, titanium dioxide (TiO₂), calcium carbonate (CaCO₃), polybutylene terephthalate (PBT), talc, beta nucleating agents, and combinations thereof.

Cavitating or void-initiating additives may include any suitable organic or inorganic material that is incompatible with the polymer material(s) of the layer(s) to which it is added, at the temperature of biaxial orientation, in order to create an opaque film. Examples of suitable void-initiating particles are PBT, nylon, solid or hollow pre-formed glass spheres, metal beads or spheres, ceramic spheres, calcium carbonate, talc, chalk, or combinations thereof. The average diameter of the void-initiating particles typically may be from about 0.1 to 10 µm.

Slip agents may include higher aliphatic acid amides, higher aliphatic acid esters, waxes, silicone oils, and metal soaps. Such slip agents may be used in amounts ranging from 0.1 wt % to 2 wt % based on the total weight of the layer to which it is added. An example of a slip additive that may be useful is high molecular PDSM (poly dimethyl siloxane) silicone gum.

Non-migratory slip agents, used in one or more skin layers of the multilayered films, may include polymethyl methacrylate (PMMA). The non-migratory slip agent may have a mean particle size in the range of from about 0.5 µm to 8 µm, or 1 µm to 5 µm, or 2 µm to 4 µm, depending upon layer thickness and desired slip properties. Alternatively, the size of the particles in the non-migratory slip agent, such as PMMA, may be greater than 20% of the thickness of the skin layer containing the slip agent, or greater than 40% of the thickness of the skin layer, or greater than 50% of the thickness of the skin layer. The size of the particles of such non-migratory slip agent may also be at least 10% greater than the thickness of the skin layer, or at least 20% greater than the thickness of the skin layer, or at least 40% greater than the thickness of the skin layer. Generally spherical, particulate non-migratory slip agents are contemplated, including PMMA resins, such as EPOSTAR^{™} (commercially available from Nippon Shokubai Co., Ltd. of Japan). Other commercial sources of suitable materials are also known to exist. Non-migratory means that these particulates do not generally change location throughout the layers of the film in the manner of the migratory slip agents. A conventional polydialkyl siloxane, such as silicone oil or gum additive having a viscosity of 10,000 to 2,000,000 centistokes is also contemplated.

Suitable anti-oxidants may include phenolic anti-oxidants, such as IRGANOX^{®} 1010 (commercially available from Ciba-Geigy Company of Switzerland). Such an antioxidant is generally used in amounts ranging from 0.1 wt % to 2 wt %, based on the total weight of the layer(s) to which it is added.

Anti-static agents may include alkali metal sulfonates, polyether-modified polydiorganosiloxanes, polyalkylphenylsiloxanes, and tertiary amines. Such anti-static agents may be used in amounts ranging from about 0.05 wt % to 3 wt %, based upon the total weight of the layer(s).

Examples of suitable anti-blocking agents may include silica-based products such as SYLOBLOC^{®} 44 (commercially available from Grace Davison Products of Colombia, Md.), PMMA particles such as EPOSTAR^{™} (commercially available from Nippon Shokubai Co., Ltd. of Japan), or polysiloxanes such as TOSPEARL^{™} (commercially available from GE Bayer Silicones of Wilton, Conn.). Such an anti-blocking agent comprises an effective amount up to about 3000 ppm of the weight of the layer(s) to which it is added.

Useful fillers may include finely divided inorganic solid materials such as silica, fumed silica, diatomaceous earth, calcium carbonate, calcium silicate, aluminum silicate, kaolin, talc, bentonite, clay and pulp.

Suitable moisture and gas barrier additives may include effective amounts of low-molecular weight resins, hydrocarbon resins, particularly petroleum resins, styrene resins, cyclopentadiene resins, and terpene resins.

Optionally, one or more skin layers may be coated with a wax-containing coating, for lubricity, in amounts ranging from 2 wt % to 15 wt % based on the total weight of the skin layer. Any conventional wax, such as, but not limited to Carnauba^{™} wax (commercially available from Michelman Corporation of Cincinnati, Ohio) that is useful in thermoplastic films is contemplated.

### Orientation

The claimed invention is directed to a biaxially oriented, multilayered film. Orientation in the direction of extrusion is known as machine direction (MD) orientation. Orientation perpendicular to the direction of extrusion is known as transverse direction (TD) orientation. Orientation may be accomplished by stretching or pulling a film first in the MD followed by TD orientation. Blown films or cast films may also be oriented by a tenter-frame orientation subsequent to the film extrusion process, again in one or both directions. Orientation may be sequential or simultaneous, depending upon the desired film features. Preferred orientation ratios are commonly from between about three to about six times the extruded width in the machine direction and between about four to about ten times the extruded width in the transverse direction. Typical commercial orientation processes are BOPP tenter process, blown film, and LISIM technology.

### Surface Treatment

One or both of the outer surfaces of the multilayered films, and, in particular, the sealant layers, may be surface-treated to increase the surface energy to render the film receptive to metallization, coatings, printing inks, and/or lamination. The surface treatment can be carried out according to one of the methods known in the art including corona discharge, flame, plasma, chemical treatment, or treatment by means of a polarized flame.

### Metallization

Outer surface(s) (*i*.*e*., the side facing away from the core) of the multilayered films may be metallized. For example, outer surfaces of the sealant layers and/or skin layers may undergo metallization after optionally being treated. Metallization may be carried out through conventional methods, such as vacuum metallization by deposition of a metal layer such as aluminum, copper, silver, chromium, or mixtures thereof.

### Priming

A primer coating may be applied to any surface of the multilayered films. In this case, the film may be first treated by one of the foregoing methods to provide increased active adhesive sites thereon and to the thus-treated film surface there may be subsequently applied a continuous coating of a primer material. Such primer materials are well known in the art and include, for example, epoxy and polyethylene imine) (PEI) materials. U.S. Pat. No. 3,753,769, U.S. Pat. No. 4,058,645 and U.S. Pat. No. 4,439,493 disclose the use and application of such primers. The primer provides an overall adhesively active surface for thorough and secure bonding with the subsequently applied coating composition and can be applied to the film by conventional solution coating means, for example, by roller application.

The films herein are also characterized in certain embodiments as being biaxially oriented, such as by the procedure described in U.S. Pat. No. 8,080,294. The films may be made by any suitable technique known in the art, such as a tenter process, double bubble process, LISIM^{™,} or others. Further, the working conditions, temperature settings, lines speeds, etc. will vary depending on the type and the size of the equipment used. Nonetheless, described generally here is one method of making the films described throughout this disclosure. In one particular embodiment, the films are formed and biaxially oriented using the "tentered" method. In the tenter process, sheets/films of the various materials are melt-blended and coextruded, such as through a 3, 4, 5, 7-layer die head, into the desired film structure. Extruders may be used to melt-blend the molten layer materials, the melt streams then metered to the die. The extruded sheet is then cooled using air, water, or both.

Downstream of the first cooling step in this example embodiment of the tentered process, the unoriented sheet is re-heated to a temperature of from 60 to 100 or 120 or 150° C by any suitable means, such as heated S-wrap rolls, and then passed between closely spaced differential speed rolls to achieve machine-direction orientation. It is understood by those skilled in the art that this temperature range may vary depending upon the equipment, and, in particular, upon the identity and composition of the components constituting the film. Ideally, the temperature will be below that which will melt the film, or cause it to become tacky and adhere to the equipment, but high enough to facilitate the machine-direction orientation process. Notably, such temperatures referred to herein refer to the film temperature, itself. The film temperature may be measured by using, for example, infrared spectroscopy, the source being aimed at the film as it is being processed; those skilled in the art will understand that measuring the actual film temperature may not be precise and/or fully accurate. In this case, those skilled in the art may estimate the temperature of the film by knowing the temperature of the air or roller immediately adjacent to the film that is measured by any suitable means. The heating means for the film line may be set at any appropriate level of heating, depending upon the instrument, to achieve the stated or desired film temperatures.

Subsequently, the lengthened and thinned film is cooled and passed to the tenter section of the line for TD orientation. At this point, the edges of the sheet are grasped by mechanical clips on continuous chains and pulled into a long, precisely controlled, hot-air oven for a preheating step. The film temperatures may range from 80 or 110 to 150 or 160° C in the preheating step. Again, the temperature is ideally below that which will melt the film, but high enough to facilitate the step of transverse-direction orientation. Next, the edges of the sheet are grasped by mechanical clips on continuous chains and pulled into a long, precisely controlled, hot-air oven for transverse stretching. The tenter chains diverge a desired amount to stretch the film in the transverse direction at a temperature high enough to facilitate the step of transverse-direction orientation but low enough so as not to melt the film. After stretching to the required transverse orientation, the film is then cooled from 5 to 10 or 15 or 20 or 30 or 40° C below the stretching temperature, and the mechanical clips are released prior to any edge trimming. Thereafter, optional corona or any other treatment may take place followed by winding.

Thus, in certain embodiments the fihn(s) described herein are biaxially oriented with at least a 5 or 6 or 7 or 8-fold TD orientation and at least a 2 or 3 or 4-fold MD orientation.

In the claimed invention, the core layer comprises from 2 wt.% to 30 wt.% based on the total weight of the core layer of one or more cavitating agents. Examples of cavitation and/or opacity-inducing agents includes calcium carbonate, talc, carbon black, clay, untreated silica and alumina, zinc oxide, mica, asbestos, barites, magnesium carbonate and mixtures thereof, as well as those materials made from polybutylene terephthalate, nylon-6, cyclic olefin copolymers particles, and other particles that are phase-distinct from the core layer material, and having a size that, during orientation, will create cavities in the core layer.

### INDUSTRIAL APPLICABILITY

The disclosed multilayered films may be used as stand-alone films, laminates, or webs. Or, the multilayered films may be sealed, coated, metallized, and/or laminated to other film structures. The disclosed multilayered films may be prepared by any suitable methods comprising the steps of co-extruding a multilayered film according to the description and claims of this specification, orienting and preparing the film for intended use such as by coating, printing, slitting, or other converting methods.

For some applications, it may be desirable to laminate the multilayered films to other polymeric film or paper products for purposes such as package decor including printing and metallizing. These activities are typically performed by the ultimate end-users or film converters who process films for supply to the ultimate end-users.

The prepared multilayered film may be used as a flexible packaging film to package an article or good, such as a food item or other product. In some applications, the film may be formed into a pouch type of package, such as may be useful for packaging a beverage, liquid, granular, or dry-powder product. The prepared multilayered films may be used also in labeling applications, in agricultural or horticultural applications, or a myriad of other applications.

### EXPERIMENTAL

As non-limiting examples, two biaxially oriented LLDPE films were made on semi-works line(s), wherein Table 1 is for a clear/transparent, non-cavitated structure and Table 2 is for a cavitated structure.

**TABLE 1**

| | **Clear Bi-Oriented LLDPE** | |
|---|---|---|
| **Layer** | **Composition** | **Thickness** |
| **Skin layer** | metallocene LLDPE¹ + 1000 ppm zeolite (5 µm) | **1 µm** |
| **Core layer** | metallocene LLDPE¹ | **23 µm** |
| **Skin layer** | metallocene LLDPE² + 1000 ppm zeolite (5 µm) | **1 µm** |

| | | |
|---|---|---|
| ¹ - *e*.*g*., type of LLDPE: MI = 1.9, ρ = 0.927 g/cm³, Tₘ = 127°C (a mLLDPE) ² - *e*.*g*., type of LLDPE: MI = 3.8, ρ = 0.913 g/cm³, Tₘ = 113°C (a mLLDPE) | | |

**TABLE 2**

| | **Cavitated Bi-Oriented LLDPE** | |
|---|---|---|
| **Layer** | **Composition** | **Thickness** |
| **Skin layer** | metallocene LLDPE¹ + 1000 ppm zeolite (5 µm) | **1 µm** |
| **Tie layer** | metallocene LLDPE¹ | **5 µm** |
| **Core layer** | 80 wt% metallocene LLDPE¹ + 20% (70 wt% CaC0₃ in HDPE)³ | **13 µm** |
| **Tie layer** | metallocene LLDPE¹ | **5 µm** |
| **Skin layer** | metallocene LLDPE¹ + 1000 ppm zeolite (5 µm) | **1 µm** |

| | | |
|---|---|---|
| ¹ - *e.g.,* type of mLLDPE: MI= 1.9, p = 0.927 g/cm³, Tₘ = 127°C (a mLLDPE) ² -*e.g*., type of mLLDPE: MI = 3.8, p = 0.913 g/cm³, Tₘ = 113°C (a mLLDPE) ³ - *e*.*g*., Schulman Polybatch FCC 7310 HD | | |

The following properties were measured for the clear and cavitated films of Tables 1 and 2 and are reported below in Table 3.

**TABLE 3**

| | **Clear Bi-Oriented LLDPE** | **Cavitated Bi-Oriented LLDPE** |
|---|---|---|
| **yield** | 39.0 m²/kg | 36.6 m²/kg |
| **optical gauge (ASTM D6988-08)** | 26.5 µm | 36.5 µm |
| **density (calculated)** | 0.949 g/cm³ | 0.748 g/cm³ |
| **haze (ASTM D1003)** | 4.5% | --- |
| **light transmission (ASTM D1003)** | --- | 46.5% |

Accordingly, the data indicates that LLDPE bi-oriented films may be cavitated using CaCO₃ particles as a cavitating agent in order to produce a white-opaque film, which has a lower density than the same LLDPE film in a non-cavitated state, and provides a barrier to light.

Turning now to Table 4, reported are sealing properties of the films from Tables 1 and 2. Using standard testing method of ASTM F2029. an Otto Brugger sealer with crimp jaws was used at a pressure of 41 N/cm² and a dwell time of 0.75 see over a range of temperatures from 80 °C to 150 °C on the laminates. The data indicates that cavitated bi-oriented LLDPE films maintain high seal-strengths, whereas bi-oriented cavitated PP films produce weak seals due to weak adhesion of the sealant skin on the cavitated core as explained, for example, in U.S. Pat. No. 8,815,377. Equivalent cavitated BOPP samples would yield seal strengths below 1000 g/inch, which is equivalent to 400 g/cm according to significant figures. The g/inch measurements reported in Figure 2 are converted to and reported in g/cm according to the number of significant figures in the corresponding g/inch measurement.

**TABLE 4**

| **Jaw Temperature** | **Table 1 Film g/inch** | **Table 1 Film g/cm** | **Table 2 Film g/inch** | **Table 2 Film g/cm** |
|---|---|---|---|---|
| **80 °C** | 650 | 260 | 25 | 9.8 |
| **90 °C** | 830 | 330 | 155 | 61.0 |
| **100 °C** | 1095 | 431.1 | 1225 | 482.3 |
| **110 °C** | 1020 | 402 | 810 | 320 |
| **120 °C** | 1310 | 516 | 1040 | 409 |
| **130 °C** | 5715 | 2250 | 4120 | 1620 |
| **140 °C** | 7020 | 2760 | 3870 | 1520 |
| **150 °C** | 6615 | 2604 | 3795 | 1494 |

In view of the foregoing, various bags, packages, pouches (*e*.*g*., stand-up, vertical fill-and-seal, horizontal fill-and-seal, etc.), films, laminates, and other structures may be formed from the above-described films, wherein such may have products (*e.g*., food, beverages) of any phase that require seals having requisite integrity and/or barriers to water, oxygen, or other contaminants.

The foregoing is directed to example embodiments of the disclosed invention. The scope of protection is defined by the claims.

## Claims

1. A biaxially oriented, multilayered film comprising:
a core layer comprising linear, low-density polyethylene (LLDPE) and from 2 wt.% to 30 wt.% based on the total weight of the core layer of one or more cavitating agents, wherein the core layer has a first side and a second side, wherein the first side is on an opposite side of the core layer as compared to the second side;
a first skin layer, consisting of LLDPE and optionally additives, that is located on the first side;
a second skin layer, consisting of LLDPE and optionally additives, that is located on the second side,
a first tie layer, consisting of LLDPE, that is located between the core layer and the first skin layer, and
a second tie layer, consisting of LLDPE, that is located between the core layer and the second skin layer,
wherein the first tie layer and the second tie layer do not include cavitating agents, and wherein the LLDPE comprises metallocene, linear, low-density polyethylene,
wherein the LLDPE in the core layer has a melting index of 1 to 3 g/10 min (measured at 190°C - 2.13 Kg conditions), a density of 0.915 to 0.930 g/cm³, and a melting peak of 115 to 135°C,
wherein the biaxially oriented, multilayered film is white-opaque and has a sealing strength of at least 400 g/cm at 100°C under a pressure of 41 N/cm² at a dwell time of 0.75 s under ASTM F2029.

2. The biaxially oriented, multilayered film of claim 1, wherein the one or more cavitating agents present in the core layer comprise CaCO₃.

3. The biaxially oriented, multilayered film of claim 1, further comprising one or more additives in the core layer in addition to the one or more cavitating agents.

4. The biaxially oriented, multilayered film of claim 1, wherein the core layer comprises at least 80 wt.% of the LLDPE.

5. The biaxially oriented, multilayered film of claim 1, further comprising metallization layer(s), primer(s), coating(s), printing ink(s), a lamination layer or combinations thereof.

6. The biaxially oriented, multilayered film of claim 1, further comprising surface treatment(s) to any layer of the biaxially oriented, multilayered film.

## Patentansprüche

1. Biaxial orientierte mehrschichtige Folie, umfassend:
eine Kernschicht, umfassend lineares Polyethylen mit niedriger Dichte (LLDPE) und zu 2 Gew.-% bis 30 Gew.-%, bezogen auf das Gesamtgewicht der Kernschicht, ein oder mehrere Kavitierungsmittel, wobei die Kernschicht eine erste Seite und eine zweite Seite aufweist, wobei sich die erste Seite im Vergleich zu der zweiten Seite auf einer gegenüberliegenden Seite der Kernschicht befindet;
eine erste Deckschicht, bestehend aus LLDPE und gegebenenfalls Zusatzstoffen, die sich auf der ersten Seite befindet;
eine zweite Deckschicht, bestehend aus LLDPE und gegebenenfalls Zusatzstoffen, die sich auf der zweiten Seite befindet,
eine erste Haftvermittlerschicht, bestehend aus LLDPE, die sich zwischen der Kernschicht und der ersten Deckschicht befindet, und
eine zweite Haftvermittlerschicht, bestehend aus LLDPE, die sich zwischen der Kernschicht und der zweiten Deckschicht befindet,
wobei die erste Haftvermittlerschicht und die zweite Haftvermittlerschicht keine Kavitierungsmittel enthalten und
wobei das LLDPE lineares Metallocen-Polyethylen mit niedriger Dichte umfasst,
wobei das LLDPE in der Kernschicht einen Schmelzindex von 1 bis 3 g/10 min (gemessen bei den Bedingungen 190 °C - 2,13 kg), eine Dichte von 0,915 bis 0,930 g/cm³ und einen Schmelz-Peak von 115 bis 135 °C aufweist,
wobei die biaxial orientierte mehrschichtige Folie weißtrüb ist und eine Versiegelungsstärke von mindestens 400 g/cm bei 100 °C unter einem Druck von 41 N/cm² bei einer Verweilzeit von 0,75 s unter ASTM F2029 aufweist.

2. Biaxial orientierte mehrschichtige Folie nach Anspruch 1, wobei das eine oder die mehreren in der Kernschicht vorhandenen Kavitierungsmittel CaCO₃ umfassen.

3. Biaxial orientierte mehrschichtige Folie nach Anspruch 1, ferner umfassend ein oder mehrere Zusatzstoffe in der Kernschicht zusätzlich zu dem einen oder den mehreren Kavitierungsmitteln.

4. Biaxial orientierte mehrschichtige Folie nach Anspruch 1, wobei die Kernschicht zu mindestens 80 Gew.-% das LLDPE umfasst.

5. Biaxial orientierte mehrschichtige Folie nach Anspruch 1, ferner umfassend Metallisierungsschicht(en), Grundierung(en), Beschichtung(en), Drucktinte(n), eine Laminierungsschicht oder Kombinationen davon.

6. Biaxial orientierte mehrschichtige Folie nach Anspruch 1, ferner umfassend Oberflächenbehandlung(en) auf einer beliebigen Schicht der biaxial orientierten mehrschichtigen Folie.

## Revendications

1. Film multicouche, orienté de manière biaxiale comprenant :
une couche noyau comprenant un polyéthylène basse densité, linéaire (LLDPE) et de 2 % en poids à 30 % en poids sur la base du poids total de la couche noyau d'un ou plusieurs agents de cavitation, la couche noyau possédant un premier côté et un deuxième côté, le premier côté étant sur un côté opposé de la couche noyau par comparaison avec le deuxième côté ;
une première couche de peau, constituée de LLDPE et éventuellement d'additifs, qui est située sur le premier côté ;
une deuxième couche de peau, constituée de LLDPE et éventuellement d'additifs, qui est située sur le deuxième côté,
une première couche de liaison, constituée de LLDPE, qui est située entre la couche noyau et la première couche de peau, et
une deuxième couche de liaison, constituée de LLDPE, qui est située entre la couche noyau et la deuxième couche de peau,
la première couche de liaison et la deuxième couche de liaison ne comprenant pas d'agents de cavitation, et
le LLDPE comprenant un polyéthylène basse densité, linéaire, de métallocène,
le LLDPE dans la couche noyau possédant un indice de fluidité à chaud de 1 à 3 g/10 min (mesuré dans des conditions de 190 °C - 2,13 kg), une densité de 0,915 à 0,930 grammes/cm³, et un pic de fusion de 115 à 135 °C,
le film multicouche, orienté de manière biaxiale étant blanc-opaque et possédant une force d'étanchéité d'au moins 400 g/cm à 100 °C sous une pression de 41 N/cm² et un temps de maintien de 0,75 s sous la norme ASTM F2029.

2. Film multicouche, orienté de manière biaxiale selon la revendication 1, l'agent ou les agents de cavitation présents dans la couche noyau comprenant du CaCO₃.

3. Film multicouche, orienté de manière biaxiale selon la revendication 1, comprenant en outre un ou plusieurs additifs dans la couche noyau en plus du ou des agents de cavitation.

4. Film multicouche, orienté de manière biaxiale selon la revendication 1, la couche noyau comprenant au moins 80 % en poids de LLDPE.

5. Film multicouche, orienté de manière biaxiale selon la revendication 1, comprenant en outre une ou plusieurs couches, un ou plusieurs apprêts, un ou plusieurs revêtements, une ou plusieurs encres de métallisation, une couche de stratification ou des combinaisons correspondantes.

6. Film multicouche, orienté de manière biaxiale selon la revendication 1, comprenant en outre un ou plusieurs traitements de surface sur une quelconque couche du film multicouche, orienté de manière biaxiale.
